# EUROPEAN PATENT SPECIFICATION

(11) **EP 2 311 662 B1**
(45) Date of publication and mention of the grant of the patent: **19.09.2012**
(21) Application number: 11151990.6
(22) Date of filing: 14.03.2007
(51) Int. Cl.: B60C 19/00, B60C 11/01, B60C 13/02

(54) **Pneumatic tire**
Luftreifen
Pneu

(30) Priority: 16.03.2006 JP 2006072759; 05.04.2006 JP 2006103764
(43) Date of publication of application: 20.04.2011
(62) Divisional of application: 08008986.5
(73) Proprietor: THE YOKOHAMA RUBBER CO., LTD., Tokyo 105-8685 (JP)
(72) Inventor: Maruyama, Hirokatsu, Kanagawa 254-8601 (JP); Oyama, Toshiro, Kanagawa 254-8601 (JP)
(74) Representative: HOFFMANN EITLE

(56) References cited:
- GB-A- 178 496
- US-A- 3 568 747
- US-B1- 6 983 911

## Description

### BACKGROUND OF THE INVENTION

The present invention relates to pneumatic tires, and more particularly, to a pneumatic tire which can improve a problem of chipping and cracking while preventing water droplets from being thrown.

When vehicles travel on wet road surfaces on rainy days or the like, water droplets are thrown from rotating tires of the vehicles, and the water droplets thrown impairs the sight of drivers of vehicles traveling behind, which badly affects on traveling safety of the vehicle. In particular, when vehicles such as trucks and buses travel on wet road surfaces, water droplets are highly thrown therefrom, which exerts an influence on vehicles traveling behind. Recently, there has been proposed a pneumatic tire having an annular projection for preventing water droplets from being thrown on the outer surface of a sidewall portion on the tread portion side thereof as prevention means (see Japanese Patent Application Kokai Publication No. 2000-318410, for example).

However, pneumatic tires used for trucks and buses often run on steps such as curbs, and the annular projection may come into contact with the steps. When the annular projection comes into contact with a step, a strong tensile stress acts in the contact portion; therefore, a problem is that the contact portion is apt to be chipped by breaking thereof. The annular projection receives compression and tension repeatedly during running of the tire on road surfaces; therefore, another problem is that cracks are apt to occur in a boundary part between the annular projection and the outer surface of the sidewall portion with deterioration of the rubber of the sidewall portion arising from deterioration with age.

GB 1 78 496 A discloses a pneumatic tire cover having moulded on or attached to each of its sides, in the region of greatest cross section of the tyre when inflated, circumferential rows of projections or studs of part-spherical, conical, truncated conical, angular or other cross-section, adapted to throw to one side any small stones or the like, the projections or studs of one row being displaced relatively to those of the other row or rows such that at every part of the circumferential length the sides of the tyre cover are adequately protected.

### SUMMARY OF THE INVENTION

According to the present invention, there is provided a pneumatic tire having a tread portion, sidewall portions and means for preventing water droplets from being thrown during travelling on a wet road surface, the prevention means being provided on an outer surface of a sidewall portion on the tread portion side thereof, the prevention means having a plurality of projection pieces extending in a circumferential direction of the tire, the plurality of projection pieces being circularly arranged on the outer surface of the sidewall portion in such a manner that there is no space between projection pieces adjacent to each other when viewed in a radial direction of the tire, wherein the plurality of projection pieces are intermittently circularly arranged in the circumferential direction of the tire in at least two rows, the projection pieces of the at least two rows being placed with offset to each other in the circumferential direction of the tire in such a manner that there is no space between a projection piece of one of the at least two rows and a projection piece of the other thereof adjacent thereto when viewed in the radial direction of the tire, and wherein the tread portion has a tread surface, the one row of projection pieces being near the tread surface, the other row of projection pieces being remote from the tread surface, the projection pieces of the one row each having a tire circumferential length L1, measured on the outer surface of the sidewall portion, the projection pieces of the other row each having a tire circumferential length L2 measured on the outer surface of the sidewall portion, the tire circumferential length L2 being less than the tire circumferential length L1.

An advantage obtainable with embodiments of the present invention is to provide a pneumatic tire which can improve a problem of chipping and cracking while preventing water droplets from being thrown.

With embodiments of the present invention described above, since the means for preventing water droplets from being thrown during traveling on a wet road surface comprises a plurality of projection pieces, the projection pieces can be lower in rigidity than the conventional annular projection. Therefore, when the projection pieces come into contact with steps such as curbs, the projection pieces can flex to thereby moderate tensile forces acting on the contact portions; thus, the contact portions are not easily broken, enabling an increase in chipping resistance.

Since the projection pieces can flex easily also when the projection pieces receive compression and tension repeatedly during running of the tire on road surfaces, cracks are not easily created in boundary parts between the projection pieces and the outer surface of the sidewall portion.

By placing the projection pieces in such a manner that there is no space between projection pieces adjacent to each other when viewed in the radial direction of the tire, even if water droplets are thrown at any position from the tire rotating, the water droplets strike the projection pieces; therefore, water droplets can be prevented from being thrown.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a partial cross-sectional view showing a first example of a pneumatic tire, not forming part of the present invention as claimed, taken in a plane that contains the axis of rotation of the tire;
FIG. 2 is a schematic side view of the pneumatic tire of FIG 1 at the time of contact of the tire with a ground;
FIG. 3 is a partially cross-sectional and perspective view of the pneumatic tire of FIG. 1.
FIG. 4 is a partial cross-sectional view of the pneumatic tire of FIG. 1 at the time of contact of the tire with a ground;
FIG 5 is an explanatory drawing of projection pieces viewed from the outer side of the radial direction of the tire;
FIG. 6 is a partial cross-sectional view showing an embodiment of a pneumatic tire according to the present invention taken in a plane that contains the axis of rotation of the tire;
FIG. 7 is a partial cross-sectional view of the pneumatic tire of FIG 6 at the time of contact of the tire with a ground;
FIG. 8 is an explanatory drawing of two rows of projection pieces viewed from the projection end side of the projection pieces;
FIG. 9 is a drawing taken along line Z-Z of FIG. 8; and
FIG. 10 is a partial cross-sectional view of the pneumatic tire of FIG. 6 at the time of contact of the tire with a ground.

### DETAILED DESCRIPTION

Embodiments of the present invention will be described in detail blow with reference to the drawings.

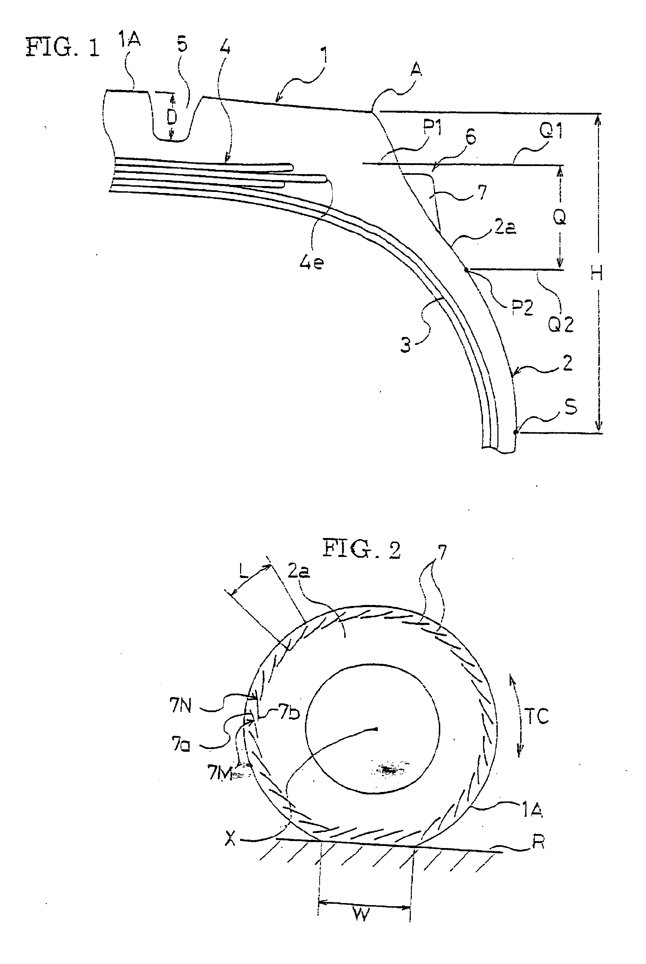

Referring to FIG. 1, there is shown a first example of a pneumatic tire, which does not form part of the present invention as claimed, and which is an example of a heavy duty pneumatic tire used for trucks and buses; reference numeral 1 denotes a tread portion, and reference numeral 2 denotes a sidewall portion. A carcass ply 3 extends between right and left bead portions (not shown), and the opposing ends of the carcass ply 3 are turned up from the inner side of the tire toward the outer side thereof around bead cores (not shown) embedded in the bead portions. A plurality of belt plies 4 are provided radially outwardly of the carcass piy 3 in the tread portion 1. The tread portion 1 has a tread surface 1A, and a plurality of main grooves 5 extending in the circumferential direction of the tire are provided in the tread surface 1A.

Means 6 for preventing water droplets from being thrown during traveling on wet road surfaces is provided in a region of the outer surface 2a of each sidewall portion 2 facing the edges 4e of the belt plies 4, the region being located on the tread portion 1 side of the sidewall portion 2 and radially outwardly of the maximum width position S of the tire (measurement position of a tire cross-sectional width specified by JATMA) on the outer surface 2a of the sidewall portion 2. The prevention means 6 comprises a plurality of projection pieces 7 of rubber which integrally protrude from the outer surface 2a of the sidewall portion 2.

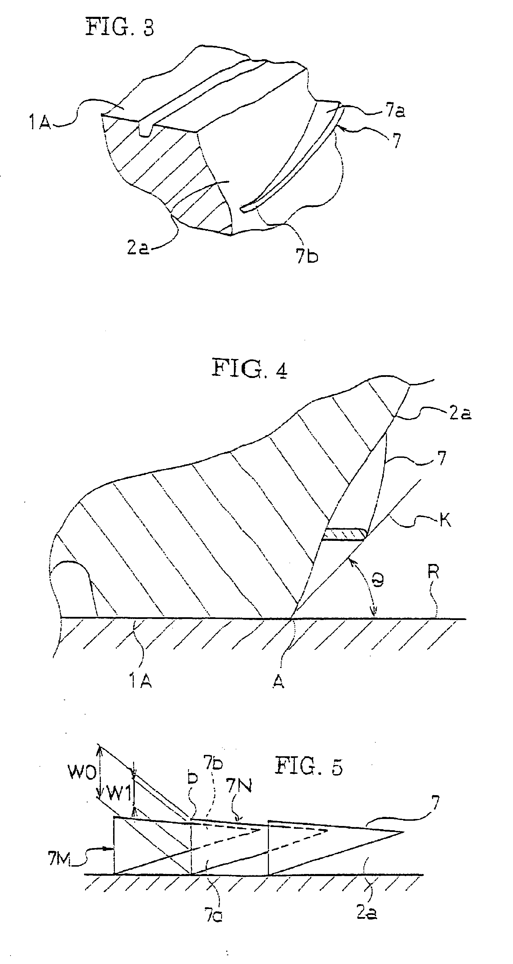

As shown in FIGS. 2 and 3, each of the projection pieces 7 extends in a manner inclined to one side with respect to the circumferential direction TC of the tire, and protrudes in the form of a triangle in such a manner that the projection piece 7 has a projection height which is gradually less from one longitudinal end 7a thereof nearer to the tread surface 1A toward the other longitudinal end 7b thereof. This allows the used amount of rubber to be reduced on the other longitudinal end 7b side of the projection piece 7, which avoids largely interrupting heat release from the edges 4e of the belt plies 4.

The plurality of projection pieces 7 include projection pieces 7M and 7N adjacent to each other and are circularly arranged in the circumferential direction TC of the tire in such a manner that the other longitudinal end 7b of one projection piece 7M of the projection pieces 7M and 7N partially overlaps the one longitudinal end 7a of the other projection piece 7N when viewed in the radial direction of the tire; the plurality of projection pieces 7 are disposed such that there is no space between the projection pieces 7M and 7N adjacent to each other when viewed in the radial direction of the tire.

According to the example as described above, the means 6 for preventing water droplets from being thrown during traveling on wet road surfaces comprises a plurality of projection pieces 7, whereby the projection pieces 7 can be lower in rigidity than the conventional annular projection; therefore, when the projection pieces 7 come into contact with steps such as curbs, the projection pieces 7 can flex to thereby moderate tensile forces acting on the contact portions. As a result, the contact portions are not easily broken, enabling an increase in chipping resistance.

Since the projection pieces 7 can flex easily also when the projection pieces 7 receive compression and tension repeatedly during running of the tire on road surfaces, cracks do not easily occur in boundary parts between the projection pieces 7 and the outer surface 2a of the sidewall portion 2.

The projection pieces 7 are circularly placed such that the projection pieces 7M and 7N adjacent to each other partially overlap each other, whereby there is no space between the projection pieces 7M and 7N adjacent to each other when viewed in the radial direction of the tire; therefore, even if water droplets are thrown at any position from the tire rotating, the water droplets strike the projection pieces 7, enabling throwing of the water droplets to be prevented.

In the example described above, the tire circumferential length L (mm) of each projection piece 7 measured on the outer surface 2a of the sidewall portion 2 is preferably 0.6W or less with respect to the maximum ground contact length W (mm) of the tire when the tire is contacted with a road surface R. If the tire circumferential length L of the projection piece 7 exceeds 0.6W, the contact portion of the projection piece 7 is apt to break because the projection piece 7 is so long in the circumferential direction TC of the tire that the tire circumferential rigidity of the projection piece 7 is high. The lower limit of the tire circumferential length L of the projection piece 7 is preferably 0.1W or more in terms of fabrication.

The projection pieces 7 are preferably disposed in a region Q (see FIG 1) of the outer surface 2a of the sidewall portion 2 located between straight lines Q1 and Q2; in cross section shown in FIG. 4 taken in a plane contains the axis of rotation of the tire when the tire is contacted with the road surface R, the straight line Q1 passes a position P1 which is 150% of the groove depth D of the main grooves 5 away inwardly in a radial direction of the tire perpendicular to the axis X of rotation of the tire from a tire ground contact end A of the tread surface 1A on the sidewall portion 2 side, and is parallel to the axis X of rotation of the tire, and the straight line Q2 passes a center position P2 on the outer surface 2a of the sidewall portion 2 between the tire ground contact end A and the tire maximum width position S, and is parallel to the axis X of rotation of the tire.

By disposing the projection pieces 7 radially inwardly of the tire from the position P1 of 150% of the groove depth D of the main grooves 5, an effect of the projection pieces 7 that prevent water droplets from being thrown can be obtained until the main grooves 5 disappear by reaching of tread wear life. By disposing the projection pieces 7 radially outwardly of the tire from the center position P2 between the tire ground contact end A and the tire maximum width position S, the projection height of the projection pieces 7 is kept low to thereby allow the amount of rubber used for the projection pieces 7 to be less, while ensuring the effect of preventing water droplets from being thrown. Preferably, the projection pieces 7 are provided in a region of the outer surface 2a of the sidewall portion 2 facing the edges 4e of the belt plies 4, because the projection height of the projection pieces 7 is kept lower to thereby allow the amount of rubber used for the projection pieces 7 to be further less while ensuring the effect of preventing water droplets from being thrown.

In cross section taken in a plane contains the axis of rotation of the tire when the tire is contacted with the road surface R, if K is the tangent line drawn to the surface of the projection piece 7 from the tire ground contact end A, the angle θ of the tangent line K with respect to the road surface R is preferably equal to or less than 45 degrees in terms of effectively preventing water droplets from being thrown. It should be noted that the projection pieces 7 are arranged such that they do not protrude beyond the tire maximum width position S in the axial direction of the tire.

As shown in FIG. 5, one projection piece 7M of the projection pieces 7M and 7N adjacent to each other is preferably gradually lower in projection height in such a manner that the projection height W1 of the one projection piece 7M at the overlapping boundary position b thereof is equal to or greater than 30% of the maximum projection height W0 of the one longitudinal end 7a of the other projection piece 7N. In the region Q of the outer surface 2a described above, the outer surface 2a gradually protrudes axially more outwardly of the tire toward the tire radially inner side. Therefore, the projection height W1 of the one projection piece 7M at the overlapping boundary position b is at least 0.3W0, resulting in that the effect of preventing water droplet from being thrown can be ensured.

The projection pieces 7 extend in the shape of circular arcs in the example shown in FIGS. 2 and 3; however, the projection pieces 7 may extend straight, It is sufficient for the projection pieces 7 to be provided on one sidewall portion 2 located on the outer side of a vehicle when the tire is mounted thereon; however, the projection pieces 7 may be provided on each sidewall portion 2 as described above.

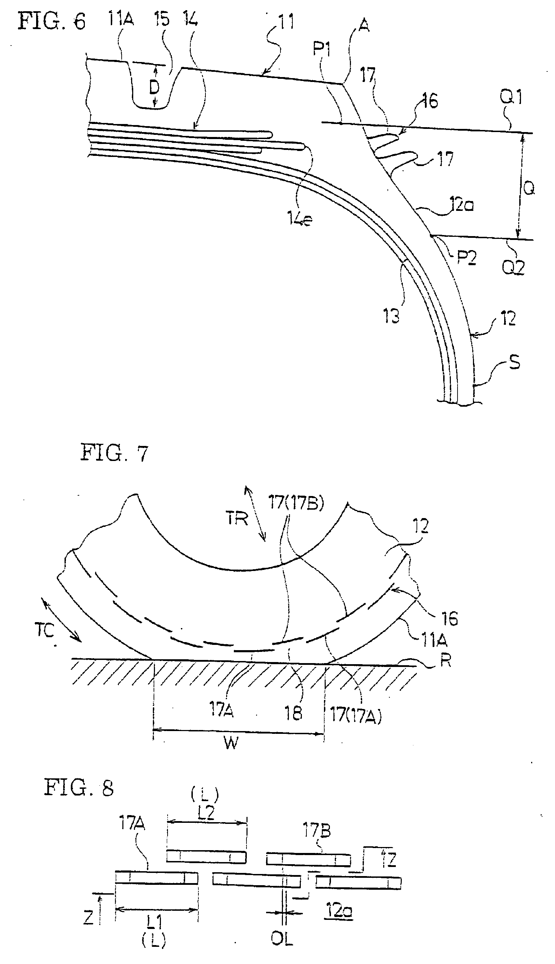

Referring to FIG. 6, there is shown an embodiment of a pneumatic tire according to the present invention, which is an example of a heavy duty pneumatic tire used for trucks and buses; reference numeral 11 denotes a tread portion, and reference numeral 12 denotes a sidewall portion.

A carcass ply 13 extends between right and left bead portions (not shown), and the opposing ends of the carcass ply 13 are turned up from the inner side of the tire toward the outer side thereof around bead cores (not shown) embedded in the bead portions. A plurality of belt plies 14 are provided radially outwardly of the carcass ply 13 in the tread portion 11. The tread portion 11 has a tread surface 11A, and a plurality of main grooves 15 extending in the circumferential direction of the tire are provided in the tread surface 11A.

Means 16 for preventing water droplets from being thrown during traveling on wet road surfaces is provided in a region of the outer surface 12a of each sidewall portion 12 facing the edges 14e of the belt plies 14, the region being located on the tread portion 11 side of the sidewall portion 12 and radially outwardly of the maximum width position S of the tire (measurement position of a tire cross-sectional width specified by JATMA) on the outer surface 12a of the sidewall portion 12. The prevention means 16 comprises a plurality of projection pieces 17 of rubber which integrally protrude from the outer surface 12a of the sidewall portion 12.

As shown in FIG. 7, each of the projection pieces 17 extends along the circumferential direction TC of the tire; the plurality of projection pieces 17 are intermittently circularly arranged in the circumferential direction TC of the tire in two rows. The two rows of projection pieces 17 comprise one row of projection pieces 17A near the tread surface 11 A and the other row of projection pieces 17B remote from the tread surface 11A.

The one row of projection pieces 17A and the other row of projection pieces 17B are disposed with offset to each other in the circumferential direction TC of the tire in such a manner that a projection piece 17A and a projection piece 17B adjacent thereto partially overlap each other when viewed in the radial direction of the tire; there is no space between the projection pieces 17A and 17B adjacent to each other in other wards, the plurality of projection pieces 17 are disposed such that spaces 18 between the projection pieces 17A of the one row are blocked by the projection pieces 7A of the other row. The other row of projection pieces 17B remote from the tread surfaces 11A protrude radially more outwardly of the tire than the one row of projection pieces 17A near the tread surface 11 A, and are designed to block water droplets from being thrown through the spaces 18 between the projection pieces 17A.

As shown in FIG. 8, the tire circumferential length L2 (mm) of the projection pieces 17B of the other row measured on the outer surface 2a of the sidewall portion 2 is less than the tire circumferential length L1 (mm) of the projection pieces 17A of the one row measured on the outer surface 2a of the sidewall portion 2. Since the projection pieces 17B of the other row are greater in projection than the projection pieces 17A of the one row, the mount of rubber used for the projection pieces 7B of the other row is greater than that used for the projection pieces 17A of the one row. Therefore, by making the tire circumferential length L2 of the projection pieces 17B of the other row less than the tire circumferential length L1 of the projection pieces 17A of the one row, the amount of rubber used for the projection pieces 7B of the other row is kept less, suppressing an increase in weight.

According to the embodiment of the present invention described above also, the means 16 for preventing water droplets from being thrown during traveling on wet road surfaces comprises a plurality of projection pieces 17, whereby the projection pieces 7 can be lower in rigidity than the conventional annular projection; therefore, when the projection pieces 17 come into contact with steps such as curbs, the projection pieces 17 can flex to thereby moderate tensile forces acting on the contact portions; accordingly, the contact portions are not easily broken, enabling an increase in chipping resistance.

Since the projection pieces 17 can flex easily also when the projection pieces 17 receive compression and tension repeatedly during running of the tire on road surfaces, cracks do not easily occur in boundary parts between the projection pieces 17 and the outer surface 12a of the sidewall portion 12.

The plurality at projection pieces 17 are placed without spaces when viewed in the radial direction of the tire; therefore, even if water droplets are thrown at any position from the tire rotating, the water droplets strike the projection pieces 17, enabling throwing of the water droplets to be prevented.

In the embodiment described above, the tire circumferential length L (mm) of each projection piece 17 measured on the outer surfaces 12a of the sidewall portion 12 is preferably 0.6W or less with respect to the maximum ground contact length W (mm) of the tire when the tire is contacted with a road surface R. If the tire circumferential length L of the projection piece 17 exceeds 0.6W, the contact portion of the projection piece 17 is apt to break because the projection piece 17 is so long in the circumferential direction TC of the tire that the tire circumferential rigidity of the projection piece 17 is high. The lower limit of the tire circumferential length L of the projection piece 17 is preferably 0.1W or more in terms of fabrication.

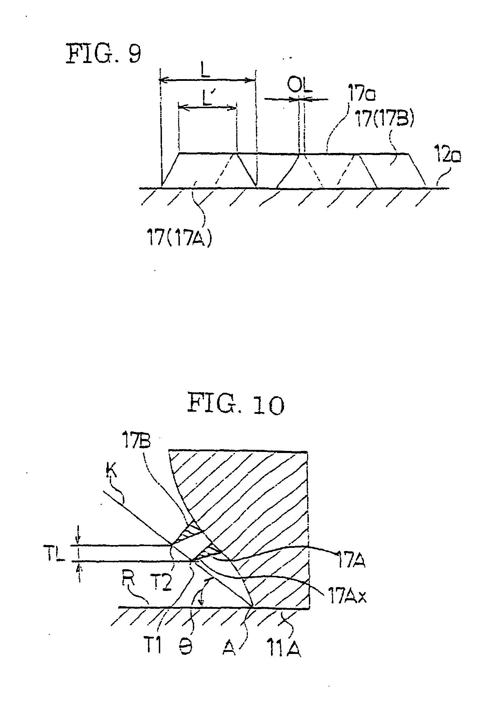

As shown in FIG. 9, it is preferable in terms of an increase in chipping resistance that the projection pieces 17 be gradually shorter in tire circumferential length toward the projection ends 17 a thereof. The ratio L'/L of the tire circumferential length L' of the projection ends 17a of the projection pieces 17 to the tire circumferential length L of the projection pieces 17 measured on the outer surface 12a of the sidewall portion 2 is preferably equal to or less than 0.8 in terms of effectively improving chipping resistance of the projection pieces 17. The lower limit of the ratio L'/L is preferably equal to or greater than 0.5 from the viewpoint of an increase in weight and maintenance of the effect of preventing water droplets from being thrown.

As shown in FIG. 10, in cross section taken in a plane that contains the axis of rotation of the tire when the tire is contacted with the road surfaces R, if K is the tangent line drawn to the surface of a projection piece 17A of the one row from a tire ground contact end A of the tread surface 11 A on the sidewall 12 side thereof, the projection pieces 17B of the other row are each preferably arranged so as to protrude to a position where the tangent line K passes as shown in FIG. 10, or beyond the position axially outwardly of the tire from the viewpoint of an increase in effect of the projection pieces 17B of the other row that prevent water droplet from being thrown. The angle [theta] of the tangent line K with respect to the road surface R is preferably equal to or less than 45 degrees.

It is preferable from the viewpoint of ensuring a high effect of preventing water droplets from being throw that the overlap length OL (mm) of projection pieces 17A and 17B adjacent to each other be 0 or more when viewed in a direction where the tangent line K extends, and the ratio TUOL satisfy a formula expressed by 0<TL/OL≤3, TL being the distance between contact points T1 and T2 when measured in a direction perpendicular to the axis of rotation of the tire, T1 being the contact point of the projection piece 17A with the tangent line K, T2 being the contact point of a tangent line drawn to the projection end surface of a projection piece 17B of the other row from the tire ground contact end A with the projection piece 17B. It should be noted that the overlap length OL of the projection pieces 17A and 17B is a tire circumferential length at a position where the area of overlapping is the least in tire circumferential length.

As in the first example, the projection pieces 17 are preferably disposed in a region Q of the outer surface 12a of the sidewall portion 12 located between straight lines Q1 and Q2; in cross section taken in a plane contains the axis of rotation of the tire when the tire is contacted with the road surface R, the straight line Q1 passes a position P1 which is 150% of the groove depth D of the main grooves 15 away inwardly in a radial direction of the tire perpendicular to the axis of rotation of the tire from the tire ground contact end A, and is parallel to the axis of rotation of the tire, and the straight line Q2 passes a center position P2 on the outer surface 12a of the sidewall portion 12 between the tire ground contact end A and the tire maximum width position S, and is parallel to the axis of rotation of the tire. Preferably, the projection pieces 17 are provided in a region of the outer surface 12a of the sidewall portion 12 facing the edges 14e of the belt plies 14, because the projection height of the projection pieces 17 is kept lower to thereby allow the amount of rubber used for the projection pieces 17 to be further less while ensuring the effect of preventing water droplets from being thrown.

The projection pieces 17 are preferably arranged in two rows as shown in the embodiment described above; however, the projection pieces 17 may be arranged in three rows or more; it suffices for the projection pieces 17 to be intermittently circularly arranged in the circumferential direction TC of the tire in at least two rows with the projection pieces 17A and 17B being offset to each other.

It is sufficient for the projection pieces 17 also to be provided on one sidewall portion 12 located on the outer side of a vehicle when the tire is mounted thereon; however, the projection pieces 17 may be provided on each sidewall portion 12 as described above.

The present invention is preferably applicable to heavy duty pneumatic tires used for trucks, buses and the like in particular; however, the present invention is not limited thereto but is also applicable to pneumatic tires for passenger cars or the like.

It should be noted that "when a tire is contacted with a road surface" referred in the present invention is when a tire is contacted with a road surface under conditions of an air pressure corresponding to the maximum load capacity written in JATMA (JATMA YEAR BOOK 2005), and a load that is the same as the maximum load capacity.

### EXAMPLE 1

Prepared were test tires according to the first example tires 1 to 3 (present examples 1 to 3), and conventional tire (conventional example), each having a tire size of 275/80R22.5; the first example tires 1 to 3 each have a construction shown in FIGS. 1 and 2 in which the projection pieces, which extends in an inclined manner in the circumferential direction of the tire on the outer surface of a sidewall portion, are circularly arranged in the circumferential direction of the tire with projection pieces adjacent to each other partially overlapping; the conventional tire has the same construction as the first example tire 1 except that a circular projection is placed instead of the projection pieces.

In each of the first example tires, the projection height W1 of the projection pieces is 50% of the maximum projection height W0 thereof, and the projection pieces each extends iv an inclined manner from the position P1 of 150% of the groove depth D of the main grooves to a position radially outward of the tire by 0.12H from the center position P2, H being the tire radial length between the tire ground contact length A and the tire maximum width position S. The tire circumferential lengths L of the projection pieces of the present invention tires are as shown in Table 1.

The test tires were seated on 22.5x7.50 sized rims, inflated to air pressure of 900 kPa, mounted on a truck having a gross weight of 25 ton, and subjected to evaluation testing for characteristics of preventing water droplets from being thrown and chipping resistance according to the following methods, obtaining the results shown in Table 1.

### Water Droplet Throw Prevention Characteristics

When the test tires were run straight on a wet test road surface, the states of water droplets thrown were visually inspected and evaluated by ten test examiners.

The evaluation results are represented by an index where the conventional tire is 100. As the index value is greater, characteristics of preventing water droplets from being thrown is better.

### Chipping Resistance

Testing of running on a curb having a height of 200 mm was carried out on the test tires 20 times repeatedly, and thereafter, the number of parts of the projection pieces or circular projection where chipping of rubber occurred was counted.

The results of evaluating chipping resistance from the occurrence number are represented by an index where the conventional tire is 100. As the index value is greater, chipping resistance is better.

**[Table 1]**

| | Conventional Example | Present Example 1 | Present Example 2 | Present Example 3 |
|---|---|---|---|---|
| Tire Circumferential Length L | -- | 0.10W | 0.35W | 0.60W |
| Water Droplet Throw Prevention Characteristics | 100 | 100 | 100 | 100 |
| Chipping Resistance | 100 | 130 | 120 | 110 |

As can be seen from Table 1, the first example tires can improve chipping resistance while preventing water droplets from being thrown.

### EXAMPLE 2

Prepared were test tires according to the present invention tires 4 to 9 (present examples 4 to 9), conventional tire (conventional example), and comparison tire (comparative example), each having a tire size of 275/80R22.5; the present invention tires 4 to 9 each have a construction shown in FIGS. 6 and 7 in which tne projection pieces are circularly arranged in the circumferential direction of tne tire in two rows on the outer surface of a sidewall portion with projection pieces of tne two rows being offset to each other in the circumferential direction of the tire; the conventional tire has the same construction as the present invention tire 4 except that a circular projection is placed instead of the projection pieces; the comparison tire has the same construction as the conventional tire except that projection pieces are intermittently arranged in the circumferential direction of the tire in one row instead of the circular projection.

In each of the present invention tires, the tire circumferential length L of the projection pieces, ratio L'/L, ratio TL/OL, and the position of the projection ends of the projection pieces of the other row remote from the tread surface are as shown in Table 2.

In the comparison tire, the tire circumferential length L of the projection pieces and ratio L'/L are as shown in Table 2.

The test tires were subjected to evaluation testing for characteristics of preventing water droplets from being thrown and chipping resistance as in Example 1, obtaining the results shown in Table 2.

**[Table 2]**

| | Conventional Example | Comparative Example | Present Example 4 | Present Example 5 |
|---|---|---|---|---|
| Tire Circumferential Length L | -- | 0.5W | 0.7W | 0.6W |
| Ratio L'/L | -- | 0.8 | 1.0 | 1.0 |
| Ratio TL/OL | -- | -- | 3.0 | 3.0 |
| Position of Projection Ends of Projection Pieces of the Other Row | -- | -- | On Tangent Line K | On Tangent Line K |
| Water Droplet Throw Prevention Characteristics | 100 | 60 | 100 | 100 |
| Chipping Resistance j | 100 | 120 | 105 | 110 |
| | Present Example 6 | Present Example 7 | Present Example 8 | Present Example 9 |
| Tire Circumferential Length L | 0.6W | 0.5W | 0.5W | 0.6W |
| Ratio L'/L | 0.8 | 0.7 | 0.8 | 0.8 |
| Ratio TL/OL | 2.0 | 1.0 | 4.0 | 2.0 |
| Position of Projection Ends of Projection Pieces of the Other Row | Outwardly of Tangent Line K | On Tangent Line K | On Tangent Line K | inwardly of Tangent Line K |
| Water Droplet Throw Prevention Characteristics | 100 | 100 | 90 | 95 |
| Chipping Resistance | 120 | 125 | 120 | 120 |

As can be seen from Table 2, the present invention tires can improve chipping resistance, while characteristics of preventing water droplets from being thrown are 90 or more, enabling characteristics of preventing water droplets from being thrown to be ensured.

## Claims

1. A pneumatic tire having a tread portion (11), sidewall portions (12) and means (16) for preventing water droplets from being thrown during travelling on a wet road surface, the prevention means (16) being provided on an outer surface (12a) of a sidewall portion (12) on the tread portion side thereof, the prevention means (16) having a plurality of projection pieces (17) extending in a circumferential direction of the tire, the plurality of projection pieces (17) being circularly arranged on the outer surface of the sidewall portion (12) in such a manner that there is no space between projection pieces (17) adjacent to each other when viewed in a radial direction of the tire,
wherein the plurality of projection pieces (17) are intermittently circularly arranged in the circumferential direction of the tire in at least two rows, the projection pieces (17) of the at least two rows being placed with offset to each other in the circumferential direction of the tire in such a manner that there is no space between a projection piece of one of the at least two rows and a projection piece of the other thereof adjacent thereto when viewed in the radial direction of the tire, and
wherein the tread portion (11) has a tread surface, the one row of projection pieces being near the tread surface, the other row of projection pieces being remote from the tread surface, the projection pieces of the one row each having a tire circumferential length L1, measured on the outer surface of the sidewall portion, the projection pieces of the other row each having a tire circumferential length L2 measured on the outer surface of the sidewall portion, the tire circumferential length L2 being less than the tire circumferential length L1.

2. A pneumatic tire according to Claim 1, wherein the tread portion (11) has a tread surface, the tread surface having a main groove (15) extending in the circumferential direction of the tire and a tire ground contact end on the sidewall portion side thereof, the plurality of projection pieces being disposed in a region of the outer surface of the sidewall portion located between straight lines Q1 and Q2, the straight line Q1 passing a position P1 which is 150% of a groove depth of the main groove away inwardly in a radial direction of the tire perpendicular to an axis of rotation of the tire from the tire ground contact end, and being parallel to the axis of rotation of the tire, the straight line Q2 passing a center position P2 between the tire ground contact end and a maximum width position S of the tire on the outer surface of the sidewall portion, and being parallel to the axis of rotation of the tire.

## Patentansprüche

1. Luftreifen, der einen Laufflächenabschnitt (11), Seitenwandabschnitte (12) und Mittel (16) zum Vermeiden, dass Wassertröpfchen während der Fahrt auf einer nassen Fahrbahnoberfläche weggeschleudert werden, aufweist, wobei die Vermeidungsmittel (16) auf einer Außenoberfläche (12a) eines Seitenwandabschnitts (12) auf der Seite des Laufflächenabschnitts davon vorgesehen sind, wobei die Vermeidungsmittel (16) eine Mehrzahl von Vorsprungsteilen (17) aufweisen, die sich in einer Umfangsrichtung des Reifens erstrecken, die mehreren Vorsprungsteile (17) auf der Außenfläche des Seitenwandabschnitts (12) auf eine solche Weise kreisförmig angeordnet sind, dass zwischen benachbarten Vorsprungsteilen (17) kein Abstand vorhanden ist, betrachtet in einer radialen Richtung des Reifens, bei dem
die mehreren Vorsprungsteile (17) in der Umfangsrichtung des Reifens in wenigstens zwei Reihen periodisch kreisförmig angeordnet sind, die Vorsprungsteile (17) der wenigstens zwei Reihen in der Umfangsrichtung des Reifens auf eine solche Weise versetzt zueinander angeordnet sind, dass zwischen einem Vorsprungsteil einer der wenigstens zwei Reihen und einem Vorsprungsteil der anderen benachbart dazu kein Abstand vorhanden ist, betrachtet in der radialen Richtung des Reifens, bei dem
der Laufflächenabschnitt (11) eine Lauffläche aufweist, wobei die eine Reihe von Vorsprungsteilen in der Nähe der Lauffläche vorgesehen ist, die andere Reihe von Vorsprungsteilen entfernt von der Lauffläche vorgesehen ist, die Vorsprungsteile der einen Reihe jeweils eine Reifenumfangslänge L1 aufweisen, gemessen auf der Außenfläche des Seitenwandabschnitts, die Vorsprungsteile der anderen Reihe jeweils eine Reifenumfangslänge L2 aufweisen, gemessen auf der Außenfläche des Seitenwandabschnitts, wobei die Reifenumfangslänge L2 kleiner als die Reifenumfangslänge L1 ist.

2. Luftreifen nach Anspruch 1, bei dem der Laufflächenabschnitt (11) eine Lauffläche aufweist, die Lauffläche eine Hauptrille (15), die sich in der Umfangsrichtung des Reifens erstreckt, und ein Reifenbodenkontaktende auf der Seite des Seitenwandabschnitts davon aufweist, die mehreren Vorsprungsteile in einem Bereich auf der Außenoberfläche des Seitenwandabschnitts angeordnet sind, der zwischen geraden Linien Q1 und Q2 positioniert ist, wobei die gerade Linie Q1 eine Position P1 durchläuft, die 150% einer Rillentiefe der Hauptrille in einer radialen Richtung des Reifens senkrecht zu einer Drehachse des Reifens von dem Reifenbodenkontaktende nach innen weg beträgt, und parallel zur Drehachse des Reifens verläuft, wobei die gerade Linie Q2 eine Zentrumsposition P2 zwischen dem Reifenbodenkontaktende und einer maximalen Breitenposition S des Reifens auf der Außenoberfläche des Seitenwandabschnitts durchläuft und parallel zur Drehachse des Reifens verläuft.

## Revendications

1. Pneu pneumatique ayant une partie de bande de roulement (11), des parties de flanc (12) et des moyens de prévention (16) pour empêcher des gouttelettes d'eau d'être projetées pendant un déplacement sur une surface de route mouillée, les moyens de prévention (16) étant disposés sur une surface extérieure (12a) d'une partie de flanc (12) sur le côté de la bande de roulement de celle-ci, les moyens de prévention (16) ayant une pluralité de pièces en saillie (17) s'étendant dans une direction circonférentielle du pneu, la pluralité de pièces en saillie (17) étant agencées circulairement sur la surface extérieure de la partie de flanc (12) de telle sorte qu'il n'y a pas d'espace entre des pièces en saillie (17) adjacentes les unes aux autres lorsque l'on regarde dans une direction radiale du pneu,
dans lequel la pluralité de pièces en saillie (17) sont agencées circulairement par intermittence dans la direction circonférentielle du pneu en au moins deux rangées, les pièces en saillie (17) des au moins deux rangées étant placées avec un décalage les unes par rapport aux autres dans la direction circonférentielle du pneu de telle sorte qu'il n'y a pas d'espace entre une pièce en saillie d'une des au moins deux rangées et une pièce en saillie de l'autre rangée adjacente à celle-ci lorsque l'on regarde dans la direction radiale du pneu, et
dans lequel la partie de bande de roulement (11) a une surface de bande de roulement, la dite une rangée de pièces en saillie étant proche de la surface de bande de roulement, l'autre rangée de pièces en saillie étant éloignée de la surface de bande de roulement, les pièces en saillie de la dite une rangée ayant chacune une longueur circonférentielle de pneu L1, mesurée sur la surface extérieure de la partie de flanc, les pièces en saillie de l'autre rangée ayant chacune une longueur circonférentielle de pneu L2 mesurée sur la surface extérieure de la partie de flanc, la longueur circonférentielle de pneu L2 étant inférieure à la longueur circonférentielle de pneu L1.

2. Pneu pneumatique selon la revendication 1, dans lequel la partie de bande de roulement (11) a une surface de bande de roulement, la surface de bande de roulement ayant une rainure principale (15) s'étendant dans la direction circonférentielle du pneu et une extrémité de pneu en contact avec le sol sur un côté de partie de flanc de celui-ci, la pluralité de pièces en saillie étant disposées dans une région de la surface extérieure de la partie de flanc située entre des lignes droites Q1 et Q2, la ligne droite Q1 passant par une position P1 qui est 150 % d'une profondeur de rainure de la rainure principale en s'écartant vers l'intérieur, dans une direction radiale du pneu perpendiculaire à un axe de rotation du pneu, de l'extrémité de pneu en contact avec le sol, et étant parallèle à l'axe de rotation du pneu, la ligne droite Q2 passant par une position de centre P2 entre l'extrémité de pneu en contact avec le sol et une position de largeur maximale S du pneu sur la surface extérieure de la partie de flanc, et étant parallèle à l'axe de rotation du pneu.
